# EUROPEAN PATENT APPLICATION

(11) **EP 2 500 536 A1**
(43) Date of publication of application: **19.09.2012**
(21) Application number: 09847194.9
(22) Date of filing: 12.11.2009
(51) Int. Cl.: F01N 3/08, F01N 3/28

(54) **EXHAUST CLEANING SYSTEM OF INTERNAL COMBUSTION ENGINE**

(71) Applicant: Toyota Jidosha Kabushiki Kaisha, Toyota-shi, Aichi 471-8571 (JP)
(72) Inventor: SAKURAI, Kenji, Toyota-shi Aichi 471-8571 (JP); MIYASHITA, Shigeki, Toyota-shi Aichi 471-8571 (JP); KATUMATA, Youichi, Toyota-shi Aichi 471-8571 (JP)
(74) Representative: Kuhnen & Wacker
(86) International application number: PCT/JP2009/069281
(87) International publication number: WO 2011/058632

(57) **Abstract**

Concerning an internal combustion engine equipped with an NSR catalyst and an SCR, this invention is intended to provide an exhaust gas purification system for an internal combustion engine, the system being used to suppress degradation of emissions due to blow-through of NOx. The exhaust gas purification system, used for the internal combustion engine 10 susceptible of lean-burn operation, includes an NSR catalyst 16 disposed in an exhaust passageway 12 of the internal combustion engine 10, an SCR 18 disposed on a downstream side relative to the NSR catalyst 16, and an element for executing rich-spike control at a predetermined interval during lean-burn operation. On the basis of a first rule as a relationship between the time interval and the amount of NH₃ generated in the NSR catalyst 16 during rich-spike control, and a second rule as a relationship between the time interval and the amount of NOx blown through the NSR catalyst 16 to the downstream side thereof during rich-spike control, the time interval is set to stay in a period during which a total of the amount of NOx blown through will be reduced and purified in the SCR 18. Preferably, the time interval is set so that a ratio of the amount of NH₃ generation to that of NOx blow-through is greater than a predetermined ratio.

## Description

### Technical Field

The present invention relates generally to exhaust gas purification systems for internal combustion engines, and more particularly, to an internal combustion engine exhaust gas purification system including an NOx storage reduction catalyst and an NOx selective reduction.

### Background Art

A system including an NOx storage reduction catalyst (hereinafter, referred to as the NSR catalyst) in the exhaust passageway of an internal combustion engine, as disclosed in Japanese Laid-Open Patent Application Publication JP-2001-271679A, is traditionally known. The NSR catalyst has a catalytic function that stores into the catalyst the nitrogen oxides (NOx) contained in combustion gas emissions from the internal combustion engine, and a catalytic function that purifies NOx and hydrocarbons (HC). The exhaust gases containing a large amount of NOx are emitted during the operation of the internal combustion engine under a lean air-fuel mixture atmosphere. The NSR catalyst stores the NOx into the catalyst and thus suppresses the situation of the NOx being released to the downstream side relative to the catalyst.

The NOx that has been stored into the NSR catalyst is next purified in predetermined timing. More specifically, the above conventional system executes rich-spike control to temporarily release unburnt constituents from the internal combustion engine. The NOx and unburnt constituents in the NSR catalyst are thus made to react in the catalyst.

Upon a large quantity of unburnt constituents being released from the internal combustion engine by the start of rich-spike control, the exhaust gases emitted to the downstream side relative to the NSR catalyst will be a stoichiometric atmosphere while NOx to be reduced by the unburnt constituents remain in the catalyst. After that, upon the reduction of the NOx stored within the catalyst, the unburnt constituents will be released to the downstream side of the catalyst, thus changing the exhaust gases into a rich atmosphere. In the above conventional system, such a change of the exhaust gases on the downstream side of the catalyst into a rich atmosphere is detected from an oxygen concentration and the NOx concentration, and in this detection timing, rich-spike control is terminated. This prevents the execution of excessive rich-spike control and hence suppresses the degradation of fuel economy.

Patent Document 1: JP-2001-271679
Patent Document 2: JP-2009-114879

### Summary of the Invention

### Problem to be Solved by the Invention

The above-discussed conventional system is claimed Lo execute rich-spike control to treat the NOx stored within the NSR catalyst. During the execution of rich-spike control, part of the stored NOx may become released to the downstream side of the catalyst. That is to say, when rich-spike control is executed and the unburnt constituents that are a reductant are introduced into the NSR catalyst, the stored NOx will become desorbed to react on the catalyst. The NOx desorbed, however, will include that blown through the NSR catalyst to the downstream side thereof without being purified on the catalyst. The blow-through of the NOx is considered to be suppressible by expanding the capacity of the catalyst for an increased reaction field size. Expanding the catalyst capacity, however, causes a significant increase in costs due to an increase in noble metal content. A system capable of suppressing the degradation of emissions due to the blow-through of NOx without involving the expansion of a catalyst capacity has been desired for such a reason.

The present invention has been made for solving the foregoing problem, and an object of the invention is to provide an exhaust gas purification system for an internal combustion engine, adapted to suppress degradation of emissions due to blow-through of NOx.

### Means for Solving the Problem

In order to attain the above object, a first aspect of the present invention is an exhaust gas purification system for an internal combustion engine which operates in lean-burn mode, the system comprising: an NOx storage reduction catalyst (hereinafter, referred to as an NSR catalyst) disposed in an exhaust passageway of the internal combustion engine; an NOx selective catalytic reduction catalyst (hereinafter, referred to as an SCR) disposed on a downstream side relative to the NSR catalyst; and rich-spike means for executing rich-spike control at a predetermined time interval during lean-burn operation. In the system, the rich-spike means includes: first-rule acquisition means for acquiring as a first rule a relationship between the time interval and an amount of NH₃ generated in the NSR catalyst during rich-spike control; second-rule acquisition means for acquiring as a second rule a relationship between the time interval and an amount of NOx blown through the NSR catalyst to the downstream side thereof during rich-spike control; and time interval setting means for setting the time interval on the basis of the first rule and the second rule so that a total of the amount of NOx blown through will be reduced and purified in the SCR.

A second aspect of the present invention is that the time interval setting means in the first aspect sets the time interval so that a ratio of the amount of NH₃ generation to the amount of NOx blow-through is greater than a predetermined ratio.

A third aspect of the present invention is that the time interval setting means in the first or second aspect sets the time interval in a range that an increase rate of the amount of NH₃ generation in the first rule becomes

### larger than a predetermined rate.

A fourth aspect of the present invention is that the time interval setting means in the first or second aspect sets the time interval in a range that the amount of NH₃ generation in the first rule becomes larger than a predetermined amount.

### Effects of the Invention

During lean-burn operation of an internal combustion engine, the NOx that has been emitted from the engine is stored into an NSR catalyst (NOx storage reduction catalyst). When rich-spike control is next executed, the NSR catalyst purifies the stored NOx and generates NH₃. The generated NH₃ flows through an exhaust passageway and is stored into an NOx selective catalytic reduction (SCR) disposed on a downstream side. The SCR then uses the stored NH₃ to selectively reduce the NOx blown through the NSR catalyst to the downstream side thereof.

The execution of rich-spike control at longer intervals causes a greater amount of NOx to be stored into the NSR catalyst. As the time interval is extended, therefore, a greater amount of NH₃ will be generated during rich-spike control. Meanwhile, as a greater amount of NOx is stored into the NSR catalyst, that is, as the time interval is extended, a greater amount of NOx will be blown through the NSR catalyst during rich-spike control. According to the first aspect of the present invention, on the basis of the first rule, that is, the relationship between the time interval and the amount of NH₃ generated, and the second rule, that is, the relationship between the time interval and the amount of NOx blown through, the time interval is set so that the SCR will reduce and purify the total amount of NOx blown through. According to the invention, therefore, since the SCR purifies the total amount of NOx blown through, the degradation of emissions is effectively suppressed.

According to the second aspect of the present invention, the time interval of the rich-spike control is set so that the ratio of the amount of NH₃ generation to the amount of NOx blow-through is greater than the predetermined value. According to the invention, therefore, a shortage of NH₃ in the SCR is avoided and thus a situation under which the system could fail to reduce and purify the total amount of NOx blown through is effectively avoided.

According to the third aspect of the present invention, the time interval of the rich-spike control is set in the range that the increase rate of the amount of NH₃ generated in the first rule will be greater than the predetermined value. According to the invention, therefore, since a large amount of NH₃ can be stored into the SCR, a situation under which the system could fail to reduce and purify the total amount of NOx blown through is effectively avoided.

According to the fourth aspect of the present invention, the time interval of the rich-spike control is set in the range that the increase rate of the amount of NH₃ generated in the first rule will be greater than the predetermined value. According to the invention, therefore, since a desired amount of NH₃ can be stored into the SCR, a situation under which the system could fail to reduce and purify the total amount of NOx blown through is effectively avoided.

### Brief Description of the Drawings

Fig. 1 is a diagram illustrating a configuration of an embodiment of the present invention;
Fig. 2 is a functional descriptive diagram of an NSR catalyst 16;
Fig. 3 is a diagram representing a relationship between a time interval, the amount of NH₃ generated, and that of NOx blown through;
Fig. 4 is a diagram that shows the amount of NOx blow-through at a time interval setting of t2 and the amount of NOx on a downstream side relative to an SCR 18, at the time interval setting of t2;
Fig. 5 is a diagram that shows the amount of NOx blow-through at a time interval setting of t3 and the amount of NOx on the downstream side relative to the SCR 18, at the time interval setting of t3; and
Fig. 6 is a diagram that shows the amount of NOx blow-through at a time interval setting of t4 and the amount of NOx on the downstream side relative to the SCR 18, at the time interval setting of t4.

### Best Mode for Carrying out the Invention

Hereunder, an embodiment of the present invention will be described in accordance with the accompanying drawings. Elements common to each drawing are each assigned the same reference number or symbol, and overlapped description of the common elements is omitted. In addition, the following embodiment does not limit the invention.

### Embodiment

### [Configuration of the embodiment]

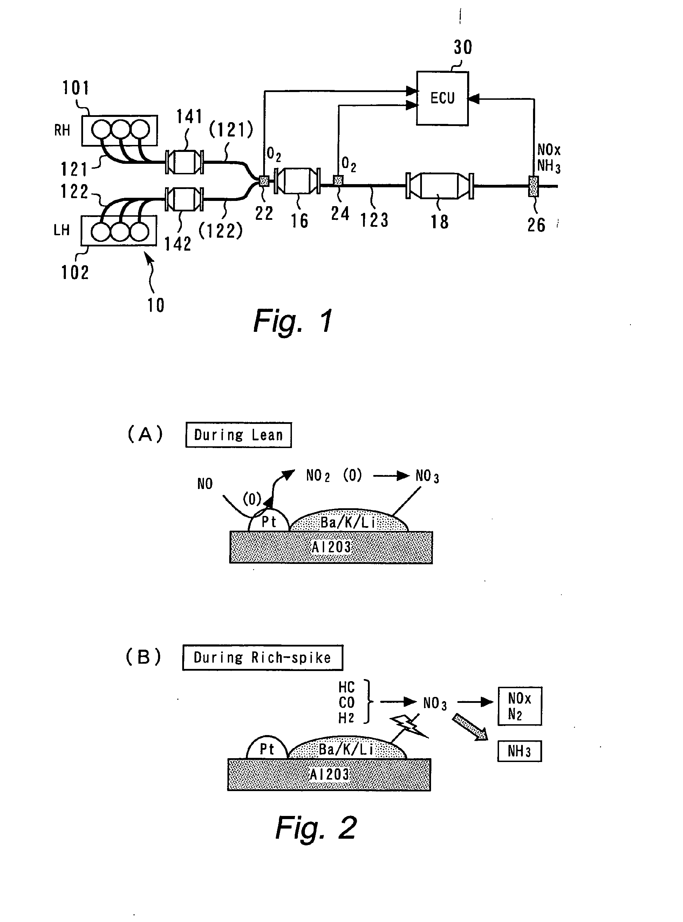

Fig. 1 is a diagram illustrating a configuration of an embodiment of the present invention. As shown in Fig. 1, an exhaust gas purification system according to the present embodiment includes an internal combustion engine 10. The internal combustion engine 10 is constructed as a V-shaped gasoline engine equipped with a right bank 101 and a left bank 102. Cylinders belonging to the right bank 101 communicate with an exhaust passageway 121. Cylinders belonging to the left bank 102 communicate with an exhaust passageway 122. The exhaust passageways 121 and 122 join together on a downstream side thereof and then communicate with one end of an exhaust passageway 123. Hereinafter, unless otherwise distinguished, the exhaust passageways 121, 122, and 123 will be collectively termed "the exhaust passageway 12".

Starting catalysts (hereinafter, termed "the SCs") 141 and 142 are arranged as three-way catalysts in the exhaust passageways 121 and 122, respectively. In addition, an NOx storage reduction catalyst (hereinafter, termed "the NSR catalyst") 16 is disposed in the exhaust passageway 123 positioned on a downstream side relative to the SCs 141 and 142. Furthermore, an NOx selective catalytic reduction catalyst (hereinafter, termed the "SCR") 18 is disposed on a downstream side relative to the NSR catalyst 16 in the exhaust passageway 123. Hereinafter, unless otherwise distinguished, the SCs 141 and 142 will be collectively termed "the SC 14".

The internal combustion engine 10 tends to emit HC and CO under a rich air-fuel mixture atmosphere. The engine 10 tends to emit NOx under a lean air-fuel mixture atmosphere. Under the lean atmosphere, the SC 14 reduces NOx (purifies to N₂) while adsorbing oxygen (O₂). Under the rich atmosphere, the SC 14 oxidizes HC and CO (purifies to H₂O and CO₂) while releasing oxygen. Additionally, under the rich atmosphere, nitrogen contained in exhaust gases reacts with hydrogen to generate ammonia (NH₃).

Under the lean atmosphere, the NSR catalyst 16 stores the NOx contained in the exhaust gases. The NSR catalyst 16 also releases the NOx stored in the catalyst under the rich atmosphere. The NOx that has been released under the rich atmosphere is reduced via HC and CO. At this time, as with the SC 14, the NSR catalyst 16 generates NH₃.

The SCR 18, constructed as an iron(Fe)-based zeolite catalyst, stores the NH₃ generated under the rich atmosphere by the SC 14 and the NSR catalyst 16. Under the lean atmosphere, the SCR 18 also functions to use NH₃ as a reductant to selectively reduce the NOx contained in the exhaust gases. A situation in which the NH₃ and NOx blown through the NSR catalyst 16 to the downstream side thereof will be released to the air can be effectively avoided by using the SCR 18.

The system shown in Fig. 1 further includes oxygen (O₂) sensors 22 and 24. The O₂ sensor 22 is positioned upstream relative to the NSR catalyst 16 in the exhaust passageway 123, and the O₂ sensor 24 is positioned downstream relative to the NSR catalyst 16 and upstream relative to the SCR 18. The O₂ sensors 22 and 24 each generate an appropriate signal according to a particular oxygen concentration in the exhaust gases. An NOx sensor 26 is also disposed downstream relative to the SCR 18 in the exhaust passageway 12. The NOx sensor responds to the NOx and NH₃ contained in the exhaust gases, and generates signals appropriate for the NOx and NH₃ concentrations. Accordingly, using the NOx sensor 26 makes it possible to detect, under the rich atmosphere, the NH₃ concentration on the downstream side relative to the SCR 18, and under the lean atmosphere, the NOx concentration on the downstream side relative to the SCR 18.

The system according to the present embodiment further includes an electronic control unit (ECU) 30 as shown in Fig. 1. Various actuators such as a fuel injector (not shown) are connected to an output section of the ECU 30. In addition to an air-fuel (A/F) sensor 20 and the above-described O₂ sensors 22 and 24, and NOx sensor 26, various other sensors for detection of operating conditions and operating states of the internal combustion engine 10 are connected to an input section of the ECU 30. On the basis of various input information, the ECU 30 controls states of the system shown in Fig. 1.

### [Operation of the First Embodiment]

### (Rich-spike control)

First, rich-spike control that the system of the present embodiment executes is described below referring to Fig. 2. Fig. 2 is a diagram for describing the rich-spike control executed in the system of the present embodiment. Section (A) in Fig. 2 shows an internal state of the catalysts existing during lean operation of the internal combustion engine 10. Section (B) in Fig. 2 shows an internal state of the catalysts existing during the execution of the rich-spike control in the internal combustion engine 10.

The ECU 30 usually operates the internal combustion engine 10 under a lean air-fuel mixture atmosphere (this operation mode is referred to as lean operation). During lean operation, NOx and other oxidants are emitted in larger quantities than HC, CO, and other reductants. For this reason, even in an attempt to use a three-way catalyst to purify the exhaust gases, not all NOx can be purified if a shortage of reductants occurs. Accordingly, the system of the present first embodiment includes the NSR catalyst 16 in the exhaust passageway 123. As shown in section (A) of Fig. 2, the NSR catalyst 16 functions to store NOx as nitrates such as Ba(NO₃)₂. The system of the present first embodiment, therefore, effectively suppresses the release of the NOx to the air, even during lean operation.

The NOx storage performance of the NSR catalyst 16, however, decreases with increases in the amount of NOx stored. This blows non-stored NOx through the catalyst to the downstream side thereof if lean operation is continued over a long time. Accordingly, the system of the present first embodiment executes the rich-spike control in which the NOx stored within the NSR catalyst 16 is treated by periodic desorbing. More specifically, a rich exhaust air-fuel (A-F) mixture is temporarily created in the internal combustion engine 10 by, for example, obtaining a rich A-F ratio of 12:1 in predetermined timing of the NSR catalyst 16 decreasing in NOx storage performance. As shown in section (B) of Fig. 2, large quantities of reductants such as HC, CO, and H₂ are contained in the exhaust gases during the execution of the rich-spike control. Upon these reductants being introduced into the NSR catalyst 16, therefore, the NOx that has been stored as nitrates is reduced to NO and desorbed from bases. The desorbed NOx is purified to N₂ and other substances in the NSR catalyst 16 and properly treated. In this way, the NOx stored within the NSR catalyst 16 is desorbed and treated by executing the rich-spike control during lean operation, so NOx storage performance is effectively restored to its original level.

### (NOx purification by SCR)

Next, functions of the SCR 18 are described below. As described above, the NOx storage performance of the NSR catalyst 16 is effectively restored to the original level by the execution of the rich-spike control. When the rich-spike control is executed, however, part of the NOx desorbed from the NSR catalyst 16 will be directly blown through to the downstream side without being purified. Additionally, as described above, there will exist the NOx blown through to the downstream side without being stored into the NSR catalyst 16 during lean operation. Emissions will degrade if these blown-through NOx substances are released intact to the air.

For this reason, the system of the present first embodiment includes the SCR 18 for treating the NOx blown through the NSR catalyst 16 to the downstream side thereof. As described above, the SCR 18 internally holds the NH₃ generated under the rich atmosphere by the SC 14 and the NSR catalyst 16. This enables the SCR 18 to selectively reduce with the NH₃, and purify, the NOx blown through the NSR catalyst 16 to the downstream side thereof. The situation where emissions are degraded by the release of the NOx to the air is thus avoided effectively.

In the present inventor's view, active reducing reactions in the SCR 18 can be generated by controlling a bed temperature of the SCR 18 to be equal to or less than 500°C, preferably, around 300°C. In the system of the present first embodiment, the SCR 18 has its position adjusted for a bed temperature around 300°C, whereby the situation of NOx being released to the downstream side of the SCR 18 is effectively suppressed.

### [Characteristic Operation of the First Embodiment]

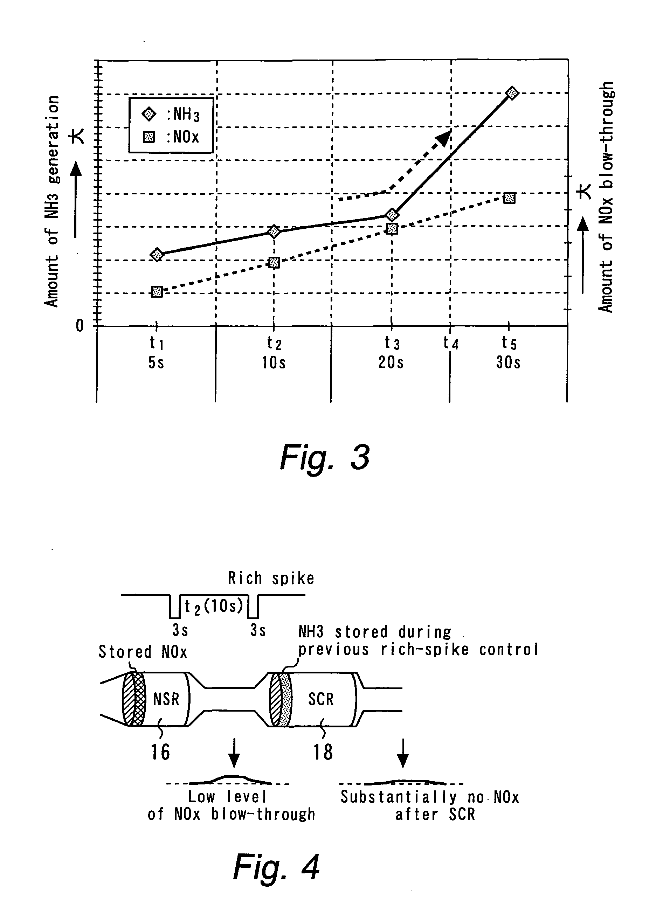

Next, characteristic operation of the present embodiment is described below with reference to Figs. 3 to 6. As described above, when the rich-spike control is executed during lean operation of the internal combustion engine 10, the NOx stored within the NSR catalyst 16 is purified to N₂ and the like, and NH₃ is also generated as an intermediate product from the purifying reactions. The generated NH₃ is stored into the SCR 18 located downstream relative to the NSR catalyst 16, and the stored NH₃ is next used to purify NOx.

In order for the SCR 18 to purify a total amount of NOx blown through, it is demanded that the system should generate large enough an amount of NH₃ to purify the total amount of NOx. Under an environment heavily laden with NOx and reduced in catalyst activity, NH₃ is generated in large quantities, such that extending the time interval of the rich-spike control is considered to be a useful method for effectively increasing the amount of NH₃ generated. This method prolongs a learn operation period, thus increasing the amount of NOx stored into the NSR catalyst 16 and hence the amount of NH₃ generated.

Extending the time interval, however, results in an increased amount of NOx blow-through. This is because, as described above, the increase in the amount of NOx storage into the NSR catalyst 16 also increases the amount of NOx blow-through. For effective purification of the blown-through NOx, therefore, a need arises to assign a time interval that allows for a balance between the amount of NH₃ generation and that of NOx blow-through.

After repeating energetic studies with focus placed on the relationship between the time interval of the rich-spike control and the amount of NH₃ generated, the present inventor has found that there exists an interval period during which the amount of NH₃ generation suddenly increases. Fig. 3 is a diagram representing the relationship between the time interval, the amount of NH₃ generated, and that of NOx blown through. As shown in the figure, the amount of NOx blow-through increases at substantially a fixed rate with respect to the time interval, whereas the amount of NH₃ generation increases suddenly at and after a time t3. These findings indicate that the relationship between the amount of NH₃ generation and that of NOx blow-through changes according to particular length of the interval.

Fig. 4 is a diagram that shows the amount of NOx blow-through at a time interval setting of t2 and the amount of NOx on the downstream side relative to the SCR 18, at the time interval setting of t2. As shown in the figure, at the time interval of t2 (10 s), the amount of NOx stored into the NSR catalyst 16 during lean operation is of a low level, for which reason, both the amount of NOx blown through, and that of NH₃ generated (i.e., the amount of storage into the SCR 18), during the rich-spike control, are also of respective low levels. Under the relationships shown in the figure, therefore, a shortage of NH₃ occurs and a trace amount of NOx is emitted to the downstream side of the SCR 18.

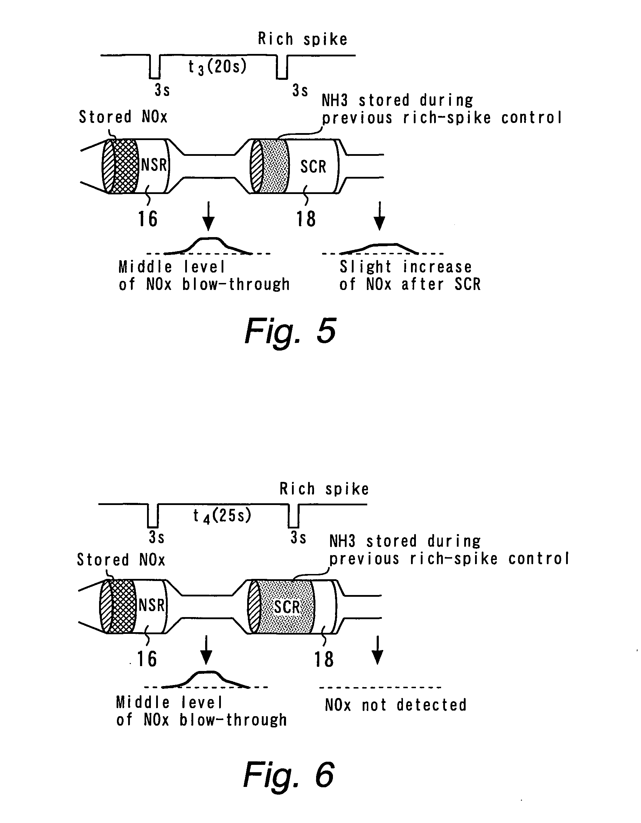

Next, Fig. 5 is a diagram that shows the amount of NOx blow-through at a time interval setting of t3 and the amount of NOx on the downstream side relative to the SCR 18, at the time interval setting of t3. As shown in the figure, at the time interval of t3 (20 s), the amount of NOx stored into the NSR catalyst 16 during lean operation is of a middle level, for which reason, both the amount of NOx blown through, and that of NH₃ generated (i.e., the amount of storage into the SCR 18), during the rich-spike control, are also of respective middle levels. Under the relationships shown in the figure, therefore, since the amount of NH₃ generation is not increased too much for the increases in the amount of NOx blow-through, the amount of NOx emitted to the downstream side of the SCR 18 is slightly increased in comparison with the amount of generation in Fig. 4.

Fig. 6 is a diagram that shows the amount of NOx blow-through at a time interval setting of t4 and the amount of NOx on the downstream side relative to the SCR 18, at the time interval setting of t4. As shown in the figure, at the time interval of t4 (25 s), the amount of NOx stored into the NSR catalyst 16 during lean operation is of a middle level, only slightly larger than that at the time interval of t3. For this reason, the amount of NOx blown through during the rich-spike control is likewise of a middle level. On the other hand, as shown in Fig. 3, the amount of NH₃ generated at the time interval setting of t4 increases abruptly in comparison with the amount of generation at the time interval setting of t3. Because of this, the amount of NH₃ stored into the SCR 18 will be large as shown in Fig. 6. Under the relationships shown in the figure, therefore, since the amount of NH₃ generation is increased abruptly in comparison with an increase rate of the amount of NOx blow-through, the amount of NOx emitted to the downstream side of the SCR 18 will unlimitedly approach zero.

In this way, the relationship between the amount of NOx blow-through and that of NH₃ generation changes according to the particular setting of the rich-spike control time interval. Accordingly, the system of the present first embodiment sets the time interval of the rich-spike control so that the above-described relationship in Fig. 6 is established between the amount of NH₃ generation and that of NOx blow-through. More specifically, on the basis of Fig. 3 representing the relationship between the time interval and the amount of NH₃ generation, the time interval is set to stay within a region that the amount of NH₃ generation abruptly increases. A way useable to identify this region would be, for example, by locating a region in which an increase rate of the amount of NH₃ generation increases above a predetermined value and using the located region as the above region, or by locating a region in which the NH₃ generation quantity itself increases above a predetermined value and using the located region as the above region. Using one of these approaches makes it possible to increase the NH₃ generation quantity for the NOx blow-through quantity and thus to effectively suppress the situation of NOx being released to the air by a shortage of NH₃.

Further extending the time interval causes too much storage of NOx into the NSR catalyst 16, resulting in an extreme increase in the amount of NOx blow-through. In order to avoid this, the time interval is desirably set to stay within a range that the amount of NH₃ generation does not run short for that of NOx blow-through.

In the system of the present first embodiment, while a time interval in the region of the NH₃ generation quantity abruptly increasing is set to avoid its shortage, this does not limit the way of setting the time interval. That is to say, the region in which the amount of NH₃ generation does not run short for that of NOx blow-through may be identified by computing a ratio of the two quantities from the relationships shown in Fig. 3.

In addition, the system of the present first embodiment provides feed-forward control of the time interval, based on the relationships shown in Fig. 3, but this does not limit the way of setting the time interval. That is to say, the NOx concentration on the downstream side of the SCR 18 may be detected by using the NOx sensor 26 to implement the feed-forward control of the time interval.

In the above-described first embodiment, the NSR catalyst 16 is equivalent to the NSR catalyst used in the first aspect of the present invention, and the SCR 18 to the SCR used in the first aspect of the invention. A solid line in Fig. 3 is equivalent to the first rule used in the first aspect of the invention, and a dashed line in Fig. 3 to the second rule used in the first aspect of the invention.

### Description of Reference characters

- 10: Internal combustion engine
- 12: Exhaust passageway
- 14: Starting catalyst (SC)
- 16: NOx storage reduction (NSR) catalyst
- 18: NOx selective catalytic reduction (SCR)
- 22: O₂ sensor
- 24: O₂ sensor
- 26: NOx sensor
- 30: ECU (Electronic Control Unit)

## Claims

1. An exhaust gas purification system for an internal combustion engine which operates in lean-burn mode, the system comprising:
an NOx storage reduction catalyst (hereinafter referred to as an NSR catalyst) disposed in an exhaust passageway of the internal combustion engine;
an NOx selective catalytic reduction catalyst (hereinafter referred to as an SCR) disposed on a downstream side relative to the NSR catalyst; and
rich-spike means for executing rich-spike control at a predetermined time interval during lean-burn operation;
wherein the rich-spike means includes:
first-rule acquisition means for acquiring, as a first rule, a relationship between the time interval and an amount of NH₃ generated in the NSR catalyst during rich-spike control;
second-rule acquisition means for acquiring, as a second rule, a relationship between the time interval and an amount of NOx blown through the NSR catalyst to the downstream side thereof during rich-spike control; and
time interval setting means for setting the time interval on the basis of the first rule and the second rule so that a total of the amount of NOx blown through will be reduced and purified in the SCR.

2. The exhaust gas purification system for the internal combustion engine according to claim 1, wherein the time interval setting means sets the time interval so that a ratio of the amount of NH₃ generation to the amount of NOx blow-through is greater than a predetermined ratio.

3. The exhaust gas purification system for the internal combustion engine according to claim 1 or 2, wherein the time interval setting means sets the time interval in a range that an increase rate of the amount of NH₃ generation in the first rule becomes larger than a predetermined rate.

4. The exhaust gas purification system for the internal combustion engine according to claim 1 or 2, wherein the time interval setting means sets the time interval in a range that the amount of NH₃ generation in the first rule becomes larger than a predetermined amount.
